# EUROPEAN PATENT APPLICATION

(11) **EP 3 112 668 A1**
(43) Date of publication of application: **04.01.2017**
(21) Application number: 16174050.1
(22) Date of filing: 10.06.2016
(51) Int. Cl.: F03D 1/06

(54) **BLADE ROOT SECTION FOR A MODULAR ROTOR BLADE AND METHOD OF MANUFACTURING SAME**

(30) Priority: 29.06.2015 US 201514753155
(71) Applicant: General Electric Company, Schenectady, NY 12345 (US)
(72) Inventor: CARUSO, Christopher Daniel, Greenville, SC South Carolina 29615 (US); YARBROUGH, Aaron A., Greenville, SC South Carolina 29615 (US); HYNUM, Daniel Alan, Greenville, SC South Carolina 29615 (US)
(74) Representative: Bedford, Grant Richard

(57) **Abstract**

The present disclosure is directed to a pre-formed blade root section 20 for a modular rotor blade 16 of a wind turbine 10 and methods of manufacturing same. More specifically, the blade root section 20 includes a root end portion 68 and one or more longitudinal spar caps 48,50 co-infused with the root end portion 68 and extending in a generally span-wise direction. In addition, the root end portion 68 includes a first end 70 and second end 72, wherein the first end 70 is configured for mounting the rotor blade 16 to a rotor 18 of the wind turbine 10.

## Description

The present disclosure relates generally to wind turbines, and more particularly to a blade root section for a wind turbine rotor blade and method of manufacturing same.

Wind power is considered one of the cleanest, most environmentally friendly energy sources presently available, and wind turbines have gained increased attention in this regard. A modem wind turbine typically includes a tower, a generator, a gearbox, a nacelle, and a rotor having a rotatable hub with one or more rotor blades. The rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

The rotor blades generally include a suction side shell and a pressure side shell typically formed using molding processes that are bonded together at bond lines along the leading and trailing edges of the blade. Further, the pressure and suction shells are relatively lightweight and have structural properties (e.g., stiffness, buckling resistance and strength) which are not configured to withstand the bending moments and other loads exerted on the rotor blade during operation. Thus, to increase the stiffness, buckling resistance and strength of the rotor blade, the body shell is typically reinforced using one or more structural components (e.g. opposing spar caps with a shear web configured therebetween) that engage the inner pressure and suction side surfaces of the shell halves. The spar caps may be constructed of various materials, including but not limited to glass fiber laminate composites and/or carbon fiber laminate composites.

Such rotor blades, however, are not without issues. For example, the bond lines of typical rotor blades are generally formed by applying a suitable bonding paste or compound along the bond line with a minimum designed bond width between the shell members. These bonding lines are a critical design constraint of the blades as a significant number of turbine blade field failures occur at the bond-line. Separation of the bond line along the leading and/or trailing edges of an operational turbine blade can result in a catastrophic failure and damage to the wind turbine.

In addition, the methods used to manufacture the rotor blades and/or structural components thereof can be difficult to control, defect prone, and/or highly labor intensive due to handling of the dry fabrics and the challenges of infusing large laminated structures. Moreover, as rotor blades continue to increase in size, conventional manufacturing methods continue to increase in complexity as the blade halves are typically manufactured using opposing mold halves that must be large enough to accommodate the entire length of the rotor blade. As such, joining the large blade halves can be highly labor intensive and more susceptible to defects.

One known strategy for reducing the complexity and costs associated with pre-forming, transporting, and erecting wind turbines having rotor blades of increasing sizes is to manufacture the rotor blades in blade segments. The blade segments may then be assembled to form the rotor blade after, for example, the individual blade segments are transported to the field. However, known joint designs for connecting the blade segments together typically have a variety of disadvantages. For example, many known joint designs do not provide for sufficient alignment of the blade segments. As such, a significant amount of time is wasted in aligning the blade segments for assembly of the rotor blade. Additionally, many known joint designs include various complex interconnecting components, thereby increasing the amount of time needed to assemble the blade segments. In addition, segmented blades are typically heavier than blades manufactured using conventional methods due to the additional joints and/or related parts. Further, each of the segments is still manufactured using blade halves that are bonded together at leading and trailing edges, which as mentioned, is a critical design constraint.

Thus, the art is continuously seeking new and improved rotor blades and related methods that address the aforementioned issues. Accordingly, the present disclosure is directed to improved modular wind turbine rotor blades having pre-formed blade root sections and methods of manufacturing same.

Various aspects and advantages of the invention will be set forth in part in the following description, or may be clear from the description, or may be learned through practice of the invention.

In one aspect, the present disclosure is directed to a modular rotor blade for a wind turbine. The rotor blade includes a pre-formed blade root section, a pre-formed blade tip section, and a plurality of blade segments (e.g. leading and trailing edge segments) arranged between the blade root section and the blade tip section. The blade root section has a root end portion and one or more longitudinal spar caps co-infused with the root end portion. Thus, the one or more spar caps extend in a generally span-wise direction. Further, the root end portion includes a first end and second end. The first end is configured for mounting the rotor blade to a rotor of the wind turbine and the second end defines a maximum chord of the rotor blade

In one embodiment, the longitudinal spar caps are configured against opposing surfaces of the plurality of blade segments and define a distance therebetween. In certain embodiments, the distance between the spar caps may vary with the span of the rotor blade. In another embodiment, the root end portion may be manufactured from a thermoset polymer, a thermoplastic polymer, or similar. In another embodiment, the one or more spar caps may be constructed of unidirectional fibers encased in a resin material. More specifically, the spar cap(s) may be formed by infusion of dry fabrics using pre-cured laminates produced of pultrusions or belt-pressing techniques, and/or from pre-preg materials. Thus, in certain embodiments, the spar cap(s) may be co-infused with the blade segments as a pre-fabricated component or may be stacked as individual plies. In addition, in particular embodiments, the spar cap(s) may be constructed of one or more pultruded parts, including but not limited to pultruded rods, pultruded plates, or similar.

In a further embodiment, the root end portion of the blade root section further includes a plurality of connection points. In particular embodiments, the connection points may include a plurality of T-bolt connections, a plurality of root inserts, or a combination thereof spaced circumferentially about the first end. Thus, the connection points are configured to receive a plurality of blade root bolts.

Accordingly, the blade root bolts are configured to secure the rotor blade to a rotor of the wind turbine.

In yet another embodiment, the maximum chord generally corresponds to a maximum allowable shipping dimension, i.e. the maximum height that is allowed for rail or truck transport.

In additional embodiments, the blade tip section of the rotor blade may also include one or more spar caps extending in a generally span-wise direction. Thus, in such embodiments, the blade root section and the blade tip section may be joined together via their respective spar caps.

In still further embodiments, the rotor blade may also include an additional structural component secured to the blade root section. Further, in certain embodiments, the structural component may be configured with the plurality of trailing edge segments.

In another aspect, the present disclosure is directed to a pre-formed blade root section for a modular rotor blade of a wind turbine. The blade root section includes a root end portion and one or more longitudinal spar caps co-infused with the root end portion. Thus, the spar cap(s) extend in a generally span-wise direction. In addition, the root end portion includes a first end and second end. The first end is configured for mounting the rotor blade to a rotor of the wind turbine, whereas the second end defines a maximum chord of the rotor blade. It should be understood that the blade root section may further include any of the additional features as described herein.

In yet another aspect, the present disclosure is directed to a method for manufacturing a blade root section for a modular rotor blade. The method includes placing at least one outer layer of composite material in a shell mold of the blade root section, wherein the outer layer forms an outer covering of the blade root section. The method also includes placing at least one inner layer of composite material in the shell mold, wherein the inner layer forms an inner surface of the blade root section. Another step includes placing one or more spar caps in the shell mold between the outer and inner layers. Thus, the method further includes infusing the inner and outer layers with the one or more spar caps together via a resin material.

In one embodiment, the method may also include placing a core material in the shell mold between the inner and outer layers and infusing the core material between the inner and outer layers. In another embodiment, the method may include pre-forming the one or more spar caps via a pultrusion process. In yet a further embodiment, the method may also include inserting, before infusing, one or more blade root inserts in the shell mold of the blade root section.

In still additional embodiments, the resin material may include a thermoset polymer, a thermoplastic polymer, or similar. In addition, the method may include pre-forming the blade root section and/or the one or more spar caps via at least one of pultrusion, vacuum infusion, resin transfer molding (RTM), light resin transfer molding (RTM), vacuum assisted resin transfer molding (VARTM), a belt-pressing process, a forming process (e.g. thermoforming), or similar.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
FIG. 1 illustrates a perspective view of a wind turbine according to the present disclosure;
FIG. 2 illustrates a perspective view of a modular rotor blade of a wind turbine according to the present disclosure;
FIG. 3 illustrates an exploded view of a modular rotor blade of a wind turbine according to the present disclosure;
FIG. 4 illustrates a cross-sectional view of one embodiment of a leading edge segment of a modular rotor blade according to the present disclosure;
FIG. 5 illustrates a cross-sectional view of one embodiment of a trailing edge segment of a modular rotor blade according to the present disclosure;
FIG. 6 illustrates a cross-sectional view of the modular rotor blade of FIG. 2 according to the present disclosure along line 6-6;
FIG. 7 illustrates a cross-sectional view of the modular rotor blade of FIG. 2 according to the present disclosure along line 7-7;
FIG. 8 illustrates a cross-sectional view of another embodiment of a modular rotor blade according to the present disclosure, particularly illustrating overlapping pressure and suction side seams;
FIG. 9 illustrates a cross-sectional view of another embodiment of a modular rotor blade according to the present disclosure, particularly illustrating a non-jointed, continuous blade segment;
FIG. 10 illustrates a cross-sectional view of another embodiment of a modular rotor blade according to the present disclosure, particularly illustrating a single-jointed blade segment;
FIG. 11 illustrates a cross-sectional view of another embodiment of a modular rotor blade according to the present disclosure, particularly illustrating a plurality of blade segments joined together via multiple joints;
FIG. 12 illustrates a perspective view of one embodiment of a blade root section of a modular rotor blade according to the present disclosure;
FIG. 13 illustrates a perspective view of one embodiment of a suction side of a blade root section of a modular rotor blade according to the present disclosure;
FIG. 14 illustrates a perspective view of one embodiment of a pressure side of a blade root section of a modular rotor blade according to the present disclosure; and
FIG. 15 illustrates a flow diagram of a method for manufacturing a blade root section of a modular rotor blade according to the present disclosure.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

Generally, the present disclosure is directed to a modular rotor blade for a wind turbine having a pre-formed blade root section that includes one or more spar caps. More specifically, the blade root section has a root end portion and one or more longitudinal spar caps co-infused with the root end portion. Thus, the one or more spar caps extend in a generally span-wise direction and provide a continuous structural support for the rotor blade. Further, the root end portion includes a first end and second end. The first end is configured for mounting the rotor blade to a rotor of the wind turbine, whereas the second end typically defines a maximum chord of the rotor blade. The modular rotor blade also includes a blade tip section and a plurality of blade segments arranged between the blade root section and the blade tip section.

The present disclosure provides many advantages not present in the prior art. For example, the blade root section of the present disclosure contains the main structural spar caps co-infused with the root end portion. By keeping the main spar caps continuous along the span-wise direction, the need for multiple scarf joints can be eliminated. Further, by co-infusing the main spar caps with the root end portion, the blade root section of the present disclosure ensures proper load transition from the spar cap(s) to the structural skin plies in the root to, ultimately, the root bolts and the hub of the wind turbine during operation. In addition, the modular rotor blade of the present disclosure has multiple blade segments and/or components that can each be individually pre-formed before assembly of the blade. Thus, the blade segments reduce the number of bond lines and shift the bond lines away from the leading and/or trailing edge regions. Further, the blade root sections as described herein reduce the content of dry glass needed to manufacture the blade, reduce shell layup time, eliminate root prefab production, and reduce infusion time.

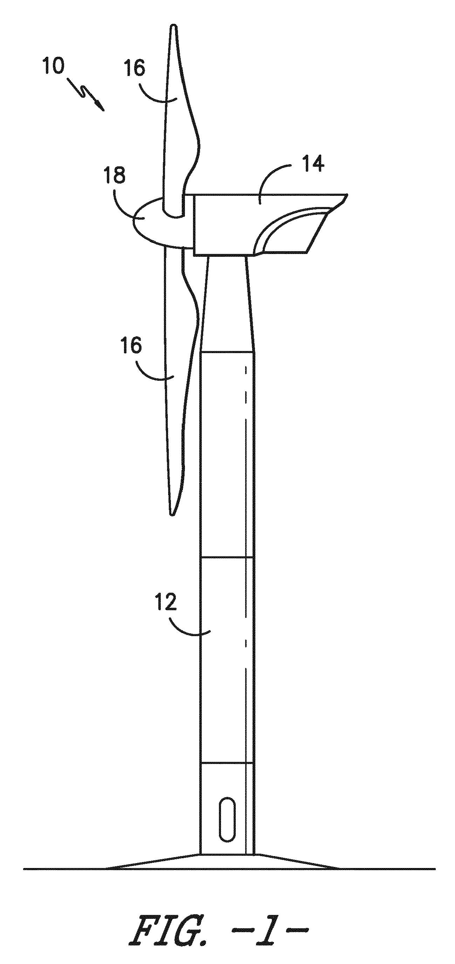

Referring now to the drawings, FIG. 1 illustrates one embodiment of a wind turbine 10 according to the present disclosure. As shown, the wind turbine 10 includes a tower 12 with a nacelle 14 mounted thereon. A plurality of rotor blades 16 are mounted to a rotor 18, which is in turn connected to a main flange that turns a main rotor shaft. The wind turbine power generation and control components are housed within the nacelle 14. The view of FIG. 1 is provided for illustrative purposes only to place the present invention in an exemplary field of use. It should be appreciated that the invention is not limited to any particular type of wind turbine configuration. In addition, the present invention is not limited to use with wind turbines, but may be utilized in any application having rotor blades.

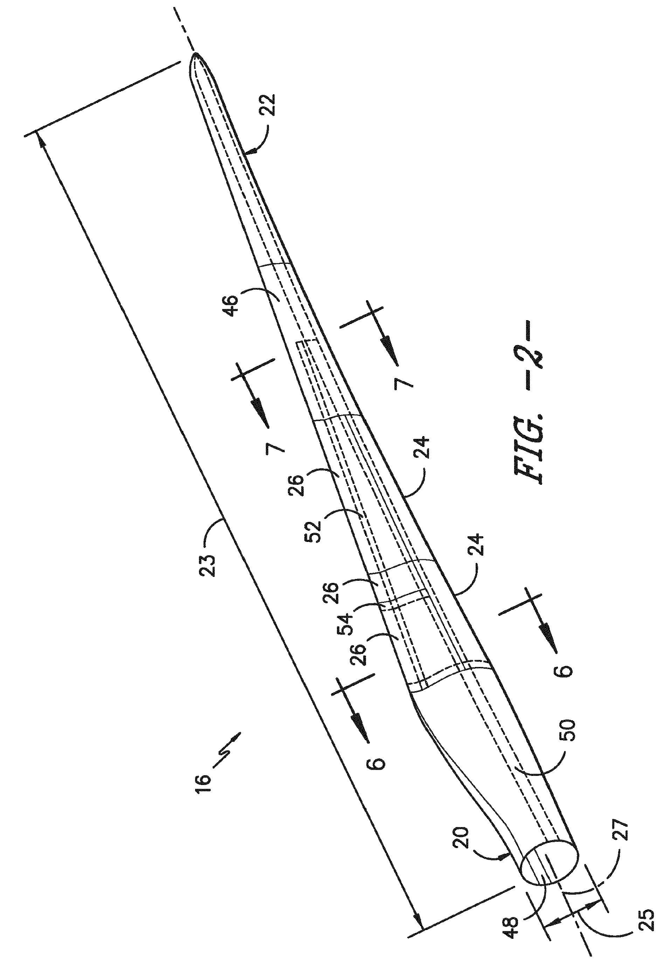

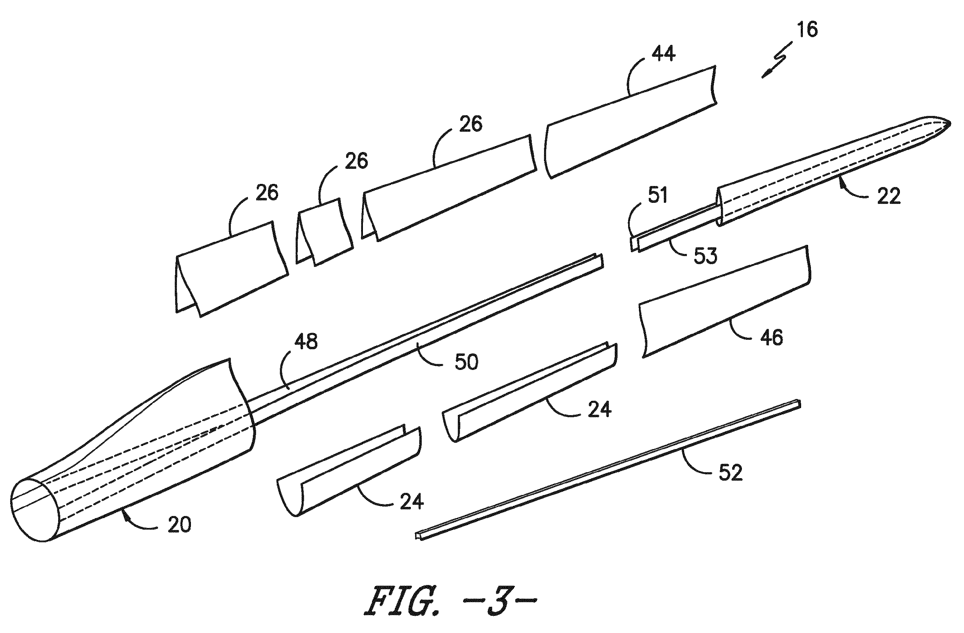

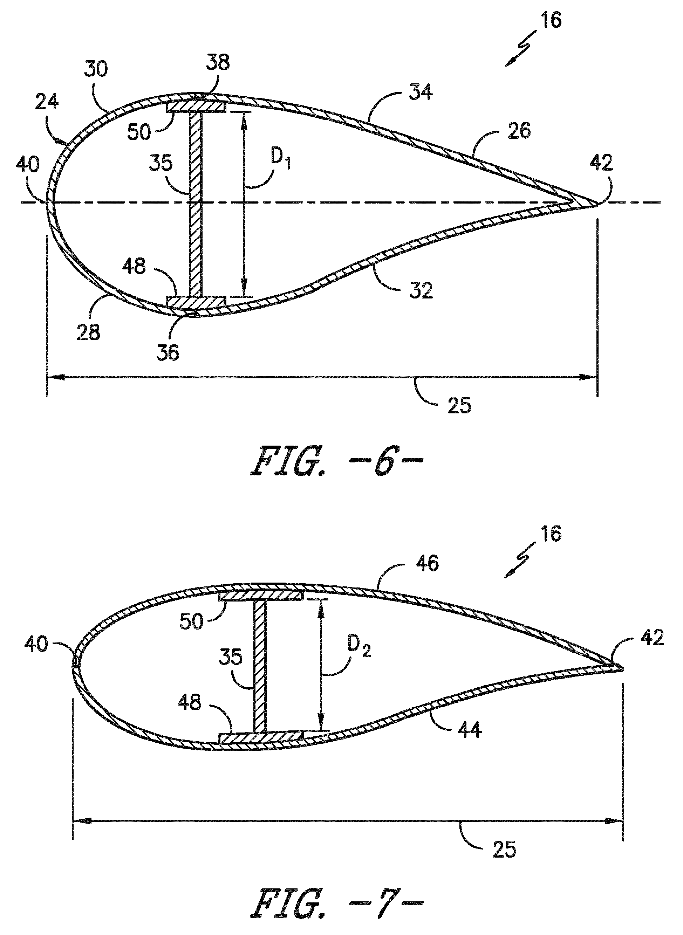

Referring now to FIGS. 2 and 3, various views of a modular rotor blade 16 manufactured according to the present disclosure are illustrated. As shown, the rotor blade 16 includes a modular configuration having a pre-formed blade root section 20 that is configured to be mounted or otherwise secured to the rotor 18 (FIG. 1), a pre-formed blade tip section 22 disposed opposite the blade root section 20, and one or more blade segments generally arranged between the blade root section 20 and the blade tip section 22 along a longitudinal axis 27 in a generally span-wise direction. Further, as shown in FIG. 2, the rotor blade 16 defines a span 23 that is equal to the total length between the blade root section 20 and the blade tip section 22. In addition, as shown in FIGS. 2 and 6, the rotor blade 16 defines a chord 25 that is equal to the total length between a leading edge 40 of the rotor blade 16 and a trailing edge 42 of the rotor blade 16. As is generally understood, the chord 25 may generally vary in length with respect to the span 23 as the rotor blade 16 extends from the blade root section 20 to the blade tip section 22.

In addition, as shown in the illustrated embodiment, the blade segments may include a plurality of leading edge segments 24 and a plurality of trailing edge segments 26 generally arranged between the blade root section 20 and the blade tip section 22 along a longitudinal axis 27 in a generally span-wise direction. In additional embodiments, it should be understood that the blade segment portion of the blade 16 may include any combination of the segments described herein and are not limited to the embodiment as depicted. Thus, the blade segments as described herein generally serve as the outer casing/covering of the rotor blade 16 and may define a substantially aerodynamic profile, such as by defining a symmetrical or cambered airfoil-shaped cross-section.

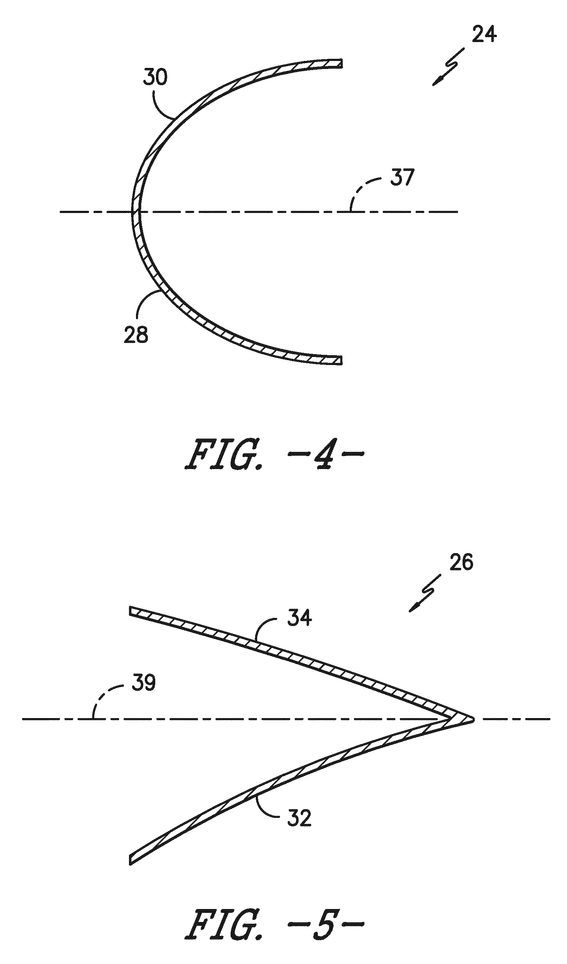

Referring now to FIG. 4, each of the leading edge segments 24 may have a forward pressure side surface 28 and a forward suction side surface 30 separated by a center line 37. Similarly, as shown in FIG. 5, each of the trailing edge segments 26 may have an aft pressure side surface 32 and an aft suction side surface 34 separated by a center line 39. Thus, as shown in FIG. 6, the leading and trailing edge segment 24, 26 may be joined at a pressure side seam 36 and a suction side seam 38. Thus, the forward pressure side surface 28 of the leading edge segment 24 and the aft pressure side surface 32 of the trailing edge segment 26 generally define a pressure side surface of the rotor blade 16. Similarly, the forward suction side surface 30 of the leading edge segment 24 and the aft suction side surface 34 of the trailing edge segment 26 generally define a suction side surface of the rotor blade 16.

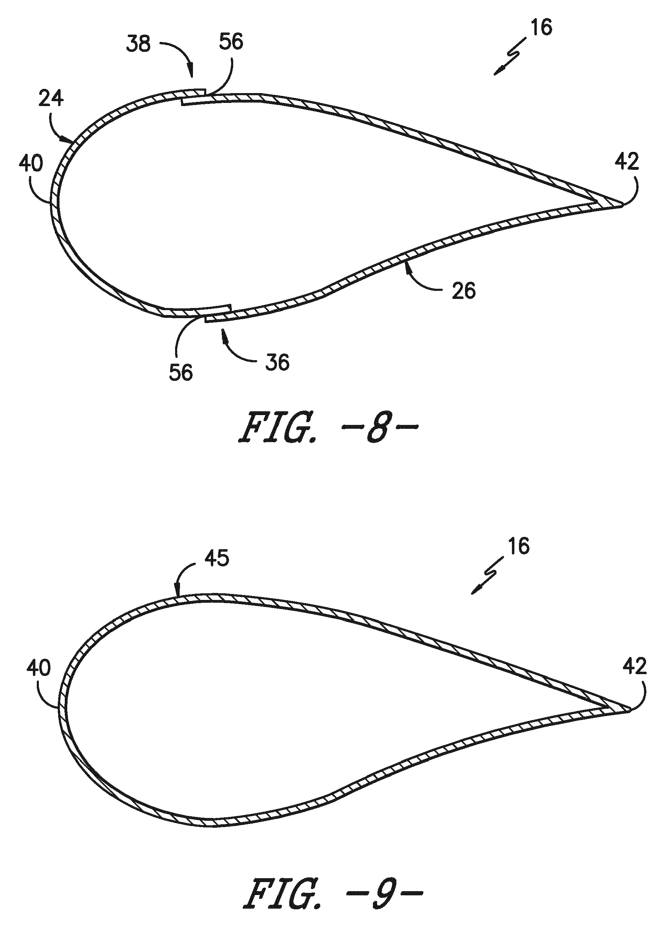

In further embodiments, as shown in FIG. 8, the leading edge segment(s) 24 and the trailing edge segment(s) 26 may be configured to overlap at the pressure side seam 36 and/or the suction side seam 38. In addition, as shown in FIG. 2, adjacent leading edge segments 24 as well as adjacent trailing edge segments 26 may be configured to overlap at a seam 54. More specifically, in certain embodiments, the various segments of the rotor blade 16 may be further secured together, e.g. via an adhesive 56 configured between the overlapping leading and trailing edge segments 24, 26 and/or the overlapping adjacent leading or trailing edge segments 24, 26.

In addition, the pressure side seam 26 and/or the suction side seam 38 may be located at any suitable chord-wise location. For example, as shown in FIGS. 6 and 8, the seams 36, 38 may be located from about 40% to about 60% chord from the leading edge 40 of the rotor blade 16. More specifically, in certain embodiments, the seams 36, 38 may be located at about 50% chord from the leading edge 40. In still further embodiments, the seams 36, 38 may be located less than 40% chord or greater than 60% chord from the leading edge 40 of the rotor blade 16. In addition, in some embodiments, the seams 36, 38 may be aligned as generally shown in the figures. Alternatively, the seams 36, 38 may be offset.

In additional embodiments, as shown in FIGS. 3 and 7, the rotor blade 16 may also include at least one pressure side segment 44 and/or at least one suction side segment 46. For example, as shown in FIG. 7, the rotor blade 16 may include a pressure side segment 44 arranged and joined with a suction side segment 46 at the leading and trailing edges 40, 42. Such segments may be used in combination with and/or exclusive of the additional segments as described herein.

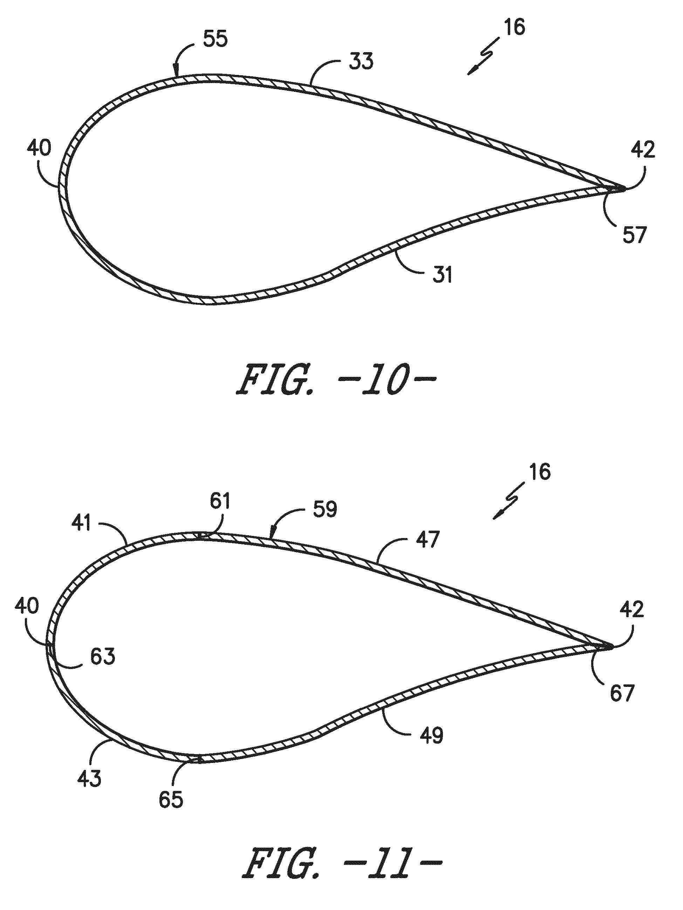

Thus far, the segments described herein are joined at two joint locations. Although, in further embodiments, less than two or more than two joint locations may be utilized. For example, as shown in FIG. 9, the rotor blade 16 may also include a non-jointed, continuous blade segment 45. More specifically, as shown, the non-jointed, continuous blade segment 45 does not require bonding of multiple segments. Such segments 45 may be used in combination with and/or exclusive of the additional segments as described herein. Further, as shown in FIG. 10, the rotor blade 16 may also include a single-jointed blade segment 55. More specifically, as shown, the blade segment 55 may include a pressure side surface 33, a suction side surface 31, and a single joint 57 at the trailing edge 42. Thus, the blade segment 55 only requires one joint instead of multiple joints. Such segments 55 may be used in combination with and/or exclusive of the additional segments as described herein. Moreover, as shown in FIG. 11, the rotor blade 16 may also include a multi-jointed blade segment 59. More specifically, as shown, the blade segment 59 includes a plurality of segments 41, 43, 47, 49 joined together via multiple joints 61, 63, 65, 67 spaced about the cross-section of the blade segment 59. More specifically, the segments 41, 43, 47, 49 may include a forward pressure side segment 43, a forward suction side segment 41, an aft pressure side segment 49, and an aft suction side segment 47. Such segments may be used in combination with and/or exclusive of the additional segments as described herein.

Referring now to FIGS. 2-3 and 6-7, the rotor blade 16 may also include one or more longitudinally extending spar caps configured to provide increased stiffness, buckling resistance and/or strength to the rotor blade 16. For example, the blade root section 20 may include one or more longitudinally extending spar caps 48, 50 co-infused therewith and configured to engage the opposing inner surfaces of the blade segments of the rotor blade 16. Similarly, the blade tip section 22 may include one or more longitudinally extending spar caps 51, 53 configured to engage the opposing inner surfaces of the blade segments of the rotor blade 16. In addition, as shown in FIGS. 6 and 7, a distance D₁ between the spar caps 48, 50 may vary down the span of the rotor blade 16. Thus, as shown, the distance, e.g. D₁, may be greater closer to the blade root than near the blade tip, e.g. D2. Further, the blade tip section 20 and/or the blade root section 22 may also include one or more shear webs 35 configured between the one or more spar caps 48, 50, 51, 53 of the blade root section 20 or the blade tip section 22, respectively. As such, the shear web(s) 35 are configured to increase the rigidity in the blade root section 20 and/or the blade tip section 22, thereby allowing the sections 20, 22 to be handled with more control.

Further, the blade root spar caps 48, 50 may be configured to align with the blade tip spar caps 51, 53 and may extend from the blade root section 20 to the blade tip section 22 or a portion thereof. Thus, in certain embodiments, the blade root section 20 and the blade tip section 22 may be joined together via their respective spar caps 48, 50, 51, 53. Thus, the spar caps 48, 50, 51, 53 may generally be designed to control the bending stresses and/or other loads acting on the rotor blade 16 in a generally span-wise direction (a direction parallel to the span 23 of the rotor blade 16) during operation of a wind turbine 10. In addition, the spar caps 48, 50, 51, 53 may be designed to withstand the span-wise compression occurring during operation of the wind turbine 10.

In still further embodiments, as shown in FIGS. 2 and 3, the rotor blade 16 may also include one or more additional structural components 52 secured to the blade root section 20 and extending in a generally span-wise direction. More specifically, the structural component 52 may extend any suitable distance between the blade root section 20 and the blade tip section 22. Thus, the structural component 52 is configured to provide additional structural support for the rotor blade 16 as well as an optional mounting structure for the various blade segments as described herein. For example, in certain embodiments, the structural component 52 may be secured to the blade root section 20 and may extend a predetermined span-wise distance such that the leading and/or trailing edge segments 24, 26 can be mounted thereto.

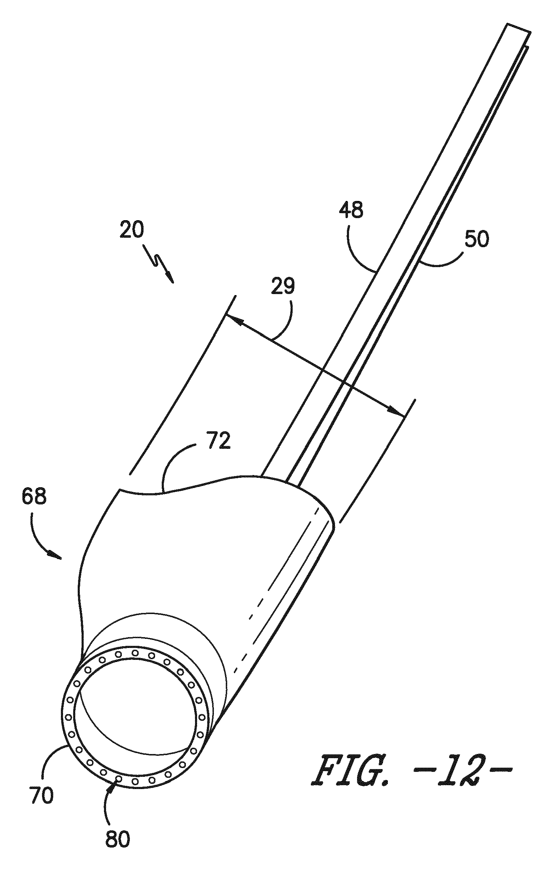

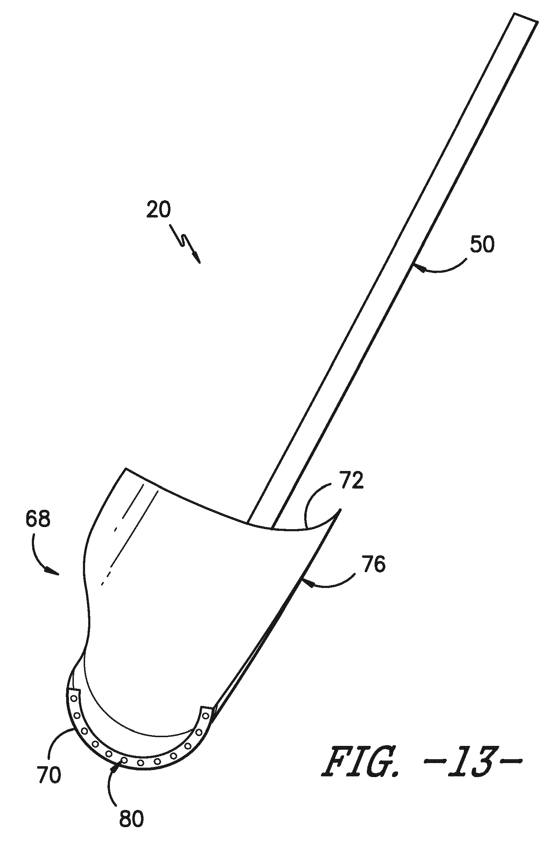

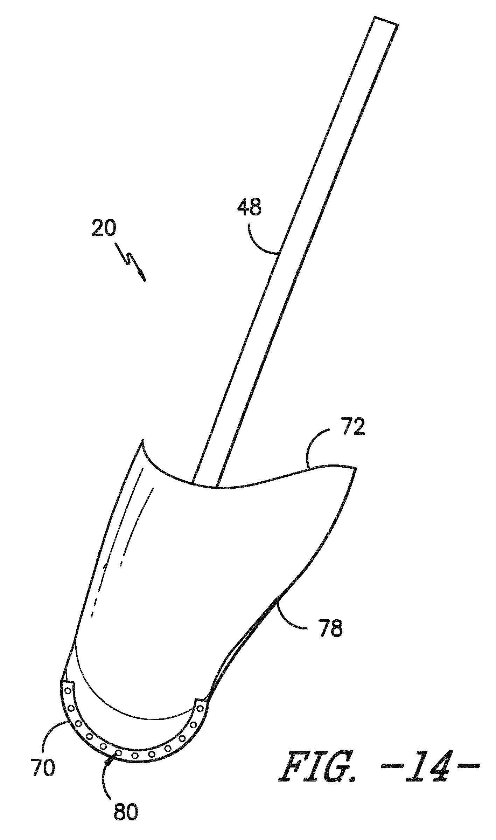

Referring now to FIG. 12-14, various views of one embodiment of the pre-formed blade root section 20 according to the present disclosure are illustrated. More specifically, FIG. 12 illustrates a perspective view of one embodiment of the blade root section 20 of the rotor blade 16, FIG. 13 illustrates a perspective view of one embodiment of a suction side 76 of the blade root section 20; and FIG. 14 illustrates a perspective view of one embodiment of a pressure side 78 of the blade root section 20. As shown, the blade root section 20 has a root end portion 68 and one or more continuous, longitudinal spar caps 48, 50 co-infused with the root end portion 68. Thus, the spar cap(s) extend in a generally span-wise direction of the rotor blade 16 (FIG. 2). Further, the root end portion 68 generally includes a first end 70 and second end 72. More specifically, as shown in the illustrated embodiments, the first end 70 of the root end portion 68 generally defines a substantially circular cross-section that transitions into an airfoil-shaped cross-section as the root end portion 68 approaches the second end 72. Thus, the substantially circular cross-section of the first end 70 may be easily mounted to the rotor 18 of the wind turbine 10. Further, in certain embodiments, the second end 72 may generally define a maximum chord 29 of the rotor blade 16. In particular embodiments, the maximum chord 29 generally corresponds to a maximum allowable shipping dimension, i.e. the maximum height, width, or depth that is allowed for rail or truck transport.

In additional embodiments, the root end portion 68 of the blade root section 20 may further include one or more blade root inserts 80 spaced circumferentially about the first end 70 of the root end portion 68. Thus, the blade root insert(s) 80 may be configured to receive a plurality of blade root bolts (not shown) so as to secure the rotor blade 16 to the rotor 18 of the wind turbine 10 via the blade root section 20.

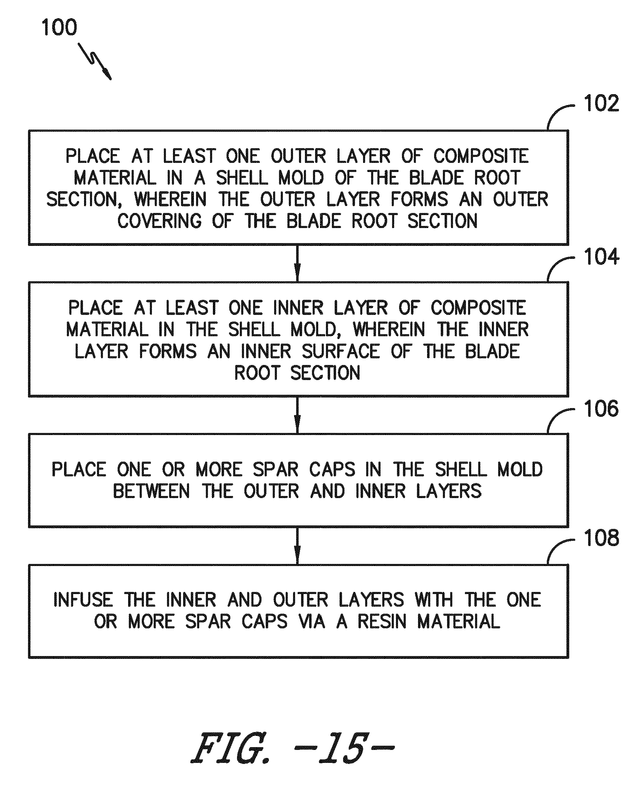

Referring now to FIG. 15, a flow diagram of a method 100 for manufacturing a blade root section 20 for a modular rotor blade 16 of a wind turbine 10 is illustrated. As shown at 102, the method 100 includes placing at least one outer layer of composite material in a shell mold of the blade root section 20. Thus, the outer layer is configured to form an outer covering of the completed blade root section 20. As shown at 104, the method 100 includes placing at least one inner layer of composite material in the shell mold. As such, the inner layer is configured to form an inner surface of the completed blade root section 20. As used herein, the "composite material" may include any suitable composite material such as a laminate composite material (e.g. a carbon fiber reinforced laminate composite or a glass fiber reinforced laminate composite). In certain embodiments, the method 100 may also include placing a core material in the shell mold between the inner and outer layers and infusing the core material between the inner and outer layers. More specifically, in particular embodiments, the core material may include any suitable material, including but not limited to a lightweight material such as wood (e.g., balsa), foam (e.g., extruded polystyrene foam), or a combination of such materials, disposed between the inner and outer layers of composite material.

As shown at 106, the method 100 may further include placing one or more spar caps 48, 50 in the shell mold between the outer and inner layers. In particular embodiments, the method 100 may include pre-forming the spar cap(s) 48, 50, e.g. using unidirectional fibers encased in a resin material. More specifically, the spar cap(s) 48, 50 may be formed by infusion of dry fabrics using pre-cured laminates produced of pultrusions or belt-pressing techniques, and/or from pre-preg materials. Thus, in certain embodiments, the spar cap(s) 48, 50 may be co-infused with the blade segments as a pre-fabricated component or may be stacked as individual plies. In addition, in particular embodiments, the spar cap(s) may be constructed of one or more pultruded parts, including but not limited to pultruded rods, pultruded plates, or similar. As such, the spar caps 48, 50 are configured to replace conventional spar caps constructed of multiple thin glass plies. As used herein, the terms "pultruded parts," "pultrusions," or similar generally encompass reinforced materials (e.g. fibers or woven or braided strands) that are impregnated with a resin and pulled through a stationary die such that the resin cures or undergoes polymerization. As such, the process of manufacturing pultruded parts is typically characterized by a continuous process of composite materials that produces composite parts having a constant cross-section.

Accordingly, as shown at 108, the method 100 may include infusing the inner and outer layers with the one or more pultruded spar caps 48, 50 (and optionally the core material) via a resin material. Thus, in certain embodiments, the blade root section 20 and the one or more spar caps 48, 50 may be infused in a single shot or mold so as to produce a uniform, integral part. More specifically, the method 100 may include pre-forming the blade root section 20 via at least one of vacuum infusion, resin transfer molding (RTM), light resin transfer molding (RTM), vacuum assisted resin transfer molding (VARTM), a forming process (e.g. thermoforming), or similar. Further, in certain embodiments, the resin or matrix material used in the infusion process may include a thermoset polymer, a thermoplastic polymer, or similar.

More specifically, in particular embodiments, the blade root section 20 as described herein may be manufactured using a polyester resin and vacuum infusion. In further embodiments, the blade root section 20 may be formed using a methacrylate-based thermoplastic resin and vacuum infusion. In a particular embodiment, the blade root section 20 may be constructed of a methacrylate-based thermoplastic resin using vacuum infusion, whereas the segments 24, 26 may be constructed of a polyethylene terephthalate (PETG) resin using a forming process. It should be understood that the examples provided herein are for illustrative purposes only and are not meant to be limiting. As such, in additional embodiments, the blade root section 20 may be manufactured using any combination of materials and/or processes as described herein. In addition, it should be understood that the blade root section 20 of the present disclosure is not limited to the modular rotor blade 16 as described herein but may be utilized with any suitable rotor blade constructed of any number of segments and/or materials.

In yet a further embodiment, the method 100 may also include inserting, before infusing, one or more blade root inserts 80 in the shell mold of the blade root section 20. In certain embodiments, the blade root inserts 80 may be pultruded components, e.g. similar to the spar caps as described herein. Thus, in certain embodiments, the pultruded blade root inserts 80 (and/or the pultruded spar caps 48, 50) are configured to reduce the content of dry glass in the rotor blade 16, replace root build-up, prefabrication, and/or barrel nuts common to many conventional rotor blades.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A modular rotor blade for a wind turbine, the rotor blade comprising:
   a pre-formed blade root section comprising:
      a root end portion comprising a first end and second end, the first end configured for mounting the rotor blade to a rotor of the wind turbine, the second end defining a maximum chord of the rotor blade; and
      one or more longitudinal spar caps co-infused with the root end portion and extending in a generally span-wise direction;
   a pre-formed blade tip section; and,
   a plurality of blade segments arranged between the blade root section and the blade tip section.
2. The modular rotor blade of clause 1, wherein the longitudinal spar caps are configured against opposing surfaces of the plurality of blade segments and define a distance therebetween.
3. The modular rotor blade of any preceding clause, wherein the blade root section is manufactured from at least one of a thermoset polymer or a thermoplastic polymer.
4. The modular rotor blade of any preceding clause, wherein the one or more spar caps are constructed of unidirectional fibers encased in a resin material.
5. The modular rotor blade of any preceding clause, wherein the one or more spar caps comprise one or more pultruded parts.
6. The modular rotor blade of any preceding clause, wherein the one or more pultruded parts comprise at least one of pultruded rods or pultruded plates.
7. The modular rotor blade of any preceding clause, wherein the root end portion of the blade root section further comprises a plurality of connection points, the connection points comprising at least one of a plurality of root inserts or a plurality of T-bolt connections spaced circumferentially about the first end, the plurality of connection points configured to receive a plurality of blade root bolts, and wherein the blade root bolts are configured to secure the rotor blade to the rotor of the wind turbine.
8. The modular rotor blade of any preceding clause, wherein the maximum chord corresponds to a maximum allowable shipping height, wherein the maximum allowable shipping height comprises a height of up to about five (5) meters.
9. The modular rotor blade of any preceding clause, wherein the blade tip section of the rotor blade further comprises one or more spar caps extending in a generally span-wise direction, and wherein the blade root section and the blade tip section are joined together via their respective spar caps.
10. The modular rotor blade of any preceding clause, further comprising an additional structural component secured to the blade root section.
11. A pre-formed blade root section for a modular rotor blade of a wind turbine, the blade root section comprising:
   a root end portion comprising a first end and second end, the first end configured for mounting the rotor blade to a rotor of the wind turbine, the second end defining a maximum chord of the rotor blade; and,
   one or more longitudinal spar caps co-infused with the root end portion and extending in a generally span-wise direction.
12. The blade root section of any preceding clause, wherein the root end portion is manufactured from at least one of a thermoset polymer or a thermoplastic polymer.
13. The blade root section of any preceding clause, wherein the one or more spar caps are constructed of unidirectional fibers encased in a resin material.
14. The blade root section of any preceding clause, wherein the one or more spar caps comprise one or more pultruded parts, wherein the one or more pultruded parts comprise at least one of pultruded rods or pultruded plates.
15. The blade root section of any preceding clause, wherein the root end portion of the blade root section further comprises a plurality of connection points, the connection points comprising at least one of a plurality of root inserts or a plurality of T-bolt connections spaced circumferentially about the first end, the plurality of connection points configured to receive a plurality of blade root bolts, and wherein the blade root bolts are configured to secure the rotor blade to the rotor of the wind turbine.
16. A method for manufacturing a blade root section for a modular rotor blade, the method comprising:
   placing at least one outer layer of composite material in a shell mold of the blade root section, wherein the outer layer forms an outer covering of the blade root section;
   placing at least one inner layer of composite material in the shell mold, wherein the inner layer forms an inner surface of the blade root section;
   placing one or more spar caps in the shell mold between the outer and inner layers; and,
   infusing the inner and outer layers with the one or more spar caps via a resin material.
17. The method of any preceding clause, further comprising placing a core material in the shell mold between the inner and outer layers and infusing the core material between the inner and outer layers.
18. The method of any preceding clause, further comprising inserting, before infusing, one or more blade root inserts in the shell mold of the blade root section.
19. The method of any preceding clause, wherein the resin material comprises at least one of a thermoset polymer or a thermoplastic polymer.
20. The method of any preceding clause, further comprising pre-forming the blade root section or the one or more spar caps via at least one of pultrusion, vacuum infusion, resin transfer molding (RTM), light resin transfer molding (RTM), vacuum assisted resin transfer molding (VARTM), a belt-pressing process, or a forming process.

## Claims

1. A modular rotor blade (16) for a wind turbine (10), the rotor blade (16) comprising:
a pre-formed blade root section (20) comprising:
a root end portion (68) comprising a first end (70) and second end (72), the first end (70) configured for mounting the rotor blade (16) to a rotor of the wind turbine (10), the second end defining a maximum chord of the rotor blade; and
one or more longitudinal spar caps (48, 50) co-infused with the root end portion (68) and extending in a generally span-wise direction;
a pre-formed blade tip section (22); and
a plurality of blade segments arranged between the blade root section (20) and the blade tip section (22).

2. The modular rotor blade (16) of claim 1, wherein the longitudinal spar caps (48, 50) are configured against opposing surfaces of the plurality of blade segments.

3. The modular rotor blade (16) of any preceding claim, wherein the blade root section (20) is manufactured from at least one of a thermoset polymer or a thermoplastic polymer.

4. The modular rotor blade (16) of any preceding claim, wherein the one or more spar caps (48, 50) are constructed of unidirectional fibers encased in a resin material.

5. The modular rotor blade (16) of claim 4, wherein the one or more spar caps (48, 50) comprise one or more pultruded parts.

6. The modular rotor blade (16) of claim 5, wherein the one or more pultruded parts comprise at least one of pultruded rods or pultruded plates.

7. The modular rotor blade (16) of any preceding claim, wherein the root end portion (68) of the blade root section (20) further comprises a plurality of connection points, the connection points comprising at least one of a plurality of root inserts (80) or a plurality of T-bolt connections spaced circumferentially about the first end (70), the plurality of connection points configured to receive a plurality of blade root bolts, and wherein the blade root bolts are configured to secure the rotor blade (16) to the rotor of the wind turbine (10).

8. The modular rotor blade (16) of any preceding claim, wherein the maximum chord corresponds to a maximum allowable shipping height, wherein the maximum allowable shipping height comprises a height of up to about five (5) meters.

9. The modular rotor blade (16) of any preceding claim, wherein the blade tip section (22) of the rotor blade (16) further comprises one or more spar caps (51, 53) extending in a generally span-wise direction, and wherein the blade root section (20) and the blade tip section (22) are joined together via their respective spar caps (48, 50, 51,53).

10. The modular rotor blade (16) of any preceding claim, further comprising an additional structural component (52) secured to the blade root section (20).

11. A method (100) for manufacturing a blade root section (20) for a modular rotor blade (16), the method (100) comprising:
placing at least one outer layer of composite material in a shell mold of the blade root section (20), wherein the outer layer forms an outer covering of the blade root section (20);
placing at least one inner layer of composite material in the shell mold, wherein the inner layer forms an inner surface of the blade root section (20);
placing one or more spar caps (48, 50) in the shell mold between the outer and inner layers; and
infusing the inner and outer layers with the one or more spar caps (48, 50) via a resin material.

12. The method (100) of claim 11, further comprising placing a core material in the shell mold between the inner and outer layers and infusing the core material between the inner and outer layers.

13. The method (100) of claim 11 or claim 12, further comprising inserting, before infusing, one or more blade root inserts in the shell mold of the blade root section (20).

14. The method (100) of any of claims 11 to 13, wherein the resin material comprises at least one of a thermoset polymer or a thermoplastic polymer.

15. The method (100) of any of claims 11 to 14, further comprising pre-forming the blade root section (20) or the one or more spar caps (48, 50) via at least one of pultrusion, vacuum infusion, resin transfer molding (RTM), light resin transfer molding (RTM), vacuum assisted resin transfer molding (VARTM), a belt-pressing process, or a forming process.
